(19) Europäisches Patentamt
European Patent Office
Office européen des brevets

(11) **EP 4 675 986 A1**

(12) **EUROPEAN PATENT APPLICATION**
published in accordance with Art. 153(4) EPC

(43) Date of publication:
07.01.2026 Bulletin 2026/02

(21) Application number: 24777405.2

(22) Date of filing: 05.01.2024

(51) International Patent Classification (IPC):
*H04L 27/26* (2006.01)

(52) Cooperative Patent Classification (CPC):
H04L 27/26

(86) International application number:
PCT/CN2024/070807

(87) International publication number:
WO 2024/198609 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.03.2023 CN 202310379801

(71) Applicant: ZTE Corporation
Shenzhen, Guangdong 518057 (CN)

(72) Inventors:
• HUA, Jian
  Shenzhen, Guangdong 518057 (CN)
• XIN, Yu
  Shenzhen, Guangdong 518057 (CN)
• BAO, Tong
  Shenzhen, Guangdong 518057 (CN)

(74) Representative: Canzler & Bergmeier
Patentanwälte
Partnerschaft mbB
Despag-Straße 6
85055 Ingolstadt (DE)

(54) **DATA TRANSMISSION METHOD, ELECTRONIC DEVICE, AND COMPUTER READABLE MEDIUM**

(57)    The present application provides a data transmission method, an electronic device, and a computer readable medium. The data transmission method comprises: in N sets of first sequences obtained by dividing a first data sequence to be transmitted, performing orthogonal spreading code transformation on data included in a first sequence meeting a condition to obtain N sets of second sequences, wherein the N sets of first sequences correspond to N time-frequency resource blocks, the first sequence meeting the condition includes a first sequence, in the N sets of first sequences, that corresponds to a time-frequency resource block having a subcarrier interval different from a subcarrier interval of an adjacent time-frequency resource block, and N is an integer greater than or equal to 2; performing first inverse Fourier transform with A-fold oversampling on the N sets of second sequences to obtain N sets of third sequences, wherein A is an integer greater than or equal to 1; performing second inverse Fourier transform on the N sets of third sequences to obtain a second data sequence; and transmitting the second data sequence over the N time-frequency resource blocks.

Perform orthogonal spreading code transformation on data contained in first sequences satisfying a condition, in N groups of first sequences obtained by dividing a first data sequence to be transmitted, to generate N groups of second sequences; the N groups of first sequences correspond to N time-frequency resource blocks, and the first sequences satisfying the condition include first sequences, in the N groups of first sequences, corresponding to the time-frequency resource blocks with a subcarrier spacing different from that of adjacent time-frequency resource blocks; N being an integer greater than or equal to 2

Perform first inverse Fourier transform with A-fold oversampling on the N groups of second sequences to obtain N groups of third sequences; A being an integer greater than or equal to 1

Perform second inverse Fourier transform on the N groups of third sequences to obtain a second data sequence

Transmit the second data sequence on the N time-frequency resource blocks

FIG. 1

EP 4 675 986 A1

## Description

TECHNICAL FIELD

The present application relates to the field of communication technologies, in particular to a data transmission method, an electronic device, and a computer readable medium.

BACKGROUND

Long Term Evolution (LTE) technology is a wireless cellular communication technology of the 4th Generation mobile communication technology (4G). The LTE adopts Orthogonal Frequency Division Multiplexing (OFDM) technology, and time-frequency resources composed of subcarriers and OFDM symbols constitute wireless physical time-frequency resources of an LTE system. Currently, the OFDM technology has been widely applied in wireless communications. Due to the adoption of the Cyclic Prefix (CP), a CP-OFDM system can effectively solve a problem of multipath delay and convert a frequency-selective channel into a set of parallel flat-fading channels, which simplifies a channel estimation method and maintains a relatively high accuracy of channel estimation. However, the performance of the CP-OFDM system is sensitive to a frequency offset and a time offset between adjacent subbands, which is mainly due to a relatively large spectral leakage of the system and therefore prone to cause inter-subband interference. The LTE system currently uses a guard interval in frequency domain, which reduces spectrum efficiency.

The 5th Generation New Radio (5G NR) still adopts CP-OFDM as a basic waveform, and different parameter values such as subcarrier spacing and the like may be adopted by two adjacent subbands, which may destroy orthogonality between subcarriers and bring new problem of interference.

SUMMARY

Embodiments of the present application provide a data transmission method, an electronic device, and a computer readable medium.

In a first aspect, an embodiment of the present application provides a data transmission method, including: performing orthogonal spreading code transformation on data contained in first sequences satisfying a condition, in N groups of first sequences obtained by dividing a first data sequence to be transmitted, to generate N groups of second sequences; the N groups of first sequences correspond to N time-frequency resource blocks, and the first sequences satisfying the condition include the first sequences, in the N groups of first sequences, corresponding to the time-frequency resource blocks with a subcarrier spacing different from a subcarrier spacing of adjacent time-frequency resource blocks; N being an integer greater than or equal to 2; performing first inverse Fourier transform with A-fold oversampling on the N groups of second sequences to obtain N groups of third sequences; A being an integer greater than or equal to 1; performing second inverse Fourier transform on the N groups of third sequences to obtain a second data sequence; and transmitting the second data sequence on the N time-frequency resource blocks.

In a second aspect, an embodiment of the present application provides an electronic device, including: at least one processor; a memory having at least one program stored thereon, the at least one program, executed by the at least one processor, implements the data transmission method described above.

In a third aspect, an embodiment of the present application provides a computer readable medium having a computer program stored thereon, the computer program, executed by a processor, implements the data transmission method described above.

In the data transmission method provided in the present application, the orthogonal spreading code transformation is performed on the data contained in the first sequences satisfying the condition, since performing orthogonal spreading code transformation on the data does not change the bandwidth occupied by the data, the interference between the time-frequency resource blocks corresponding to the first sequences satisfying the condition is reduced without changing the bandwidth occupied by the first data sequence to be transmitted, so that spectrum efficiency is improved; and the N groups of second sequences obtained after the orthogonal spreading code transformation are then subjected to inverse Fourier inverse transform twice, thereby facilitating subsequent filtering, resulting in a reduced complexity and a reduced processing time delay.

BRIEF DESCRIPTION OF DRAWINGS

Fig. 1 is a flowchart of a data transmission method provided in an embodiment of the present application;

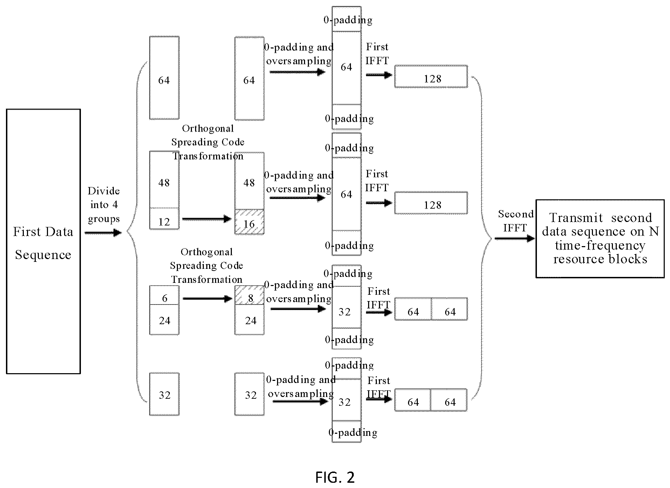

Fig. 2 is a schematic diagram of a processing procedure of processing a first data sequence to obtain a second data sequence in Example 1 of an embodiment of the present application;

Fig. 3 is a schematic diagram of a processing procedure of processing a first data sequence to obtain a second data sequence in Example 2 of an embodiment of the present application;

Fig. 4 is a schematic diagram of a processing procedure of processing a first data sequence to obtain a second data sequence in Example 3 of an embodiment of the present application;

Fig. 5 is a schematic diagram of a processing procedure of processing a first data sequence to obtain a second data sequence in Example 4 of an embodiment of the present application;

Fig. 6 is a schematic diagram of a processing procedure of processing a first data sequence to obtain a second data sequence in Example 5 of an embodiment of the present application;

Fig. 7 is a schematic diagram of a processing procedure of processing a first data sequence to obtain a second data sequence in Example 6 of an embodiment of the present application;

Fig. 8 is a schematic diagram of a processing procedure of processing a first data sequence to obtain a second data sequence in Example 7 of an embodiment of the present application;

Fig. 9 is a block diagram of an electronic device provided in an embodiment of the present application.

DETAIL DESCRIPTION OF EMBODIMENTS

In order to make those skilled in the art better understand the technical solutions of the present application, a data transmission method, an electronic device, and a computer readable medium, provided in the present application, are described in detail below with reference to the accompanying drawings.

Exemplary embodiments are described in more detail below with reference to the accompanying drawings, but the exemplary embodiments may be embodied in different forms, and should not be explanted as limited to the embodiments set forth herein. In contrast, the embodiments are provided to make the present application thorough and complete, and for those skilled in the art fully understanding the scope of the present application.

The embodiments of the present application and the technical features in the embodiments may be combined with each other if no conflict is incurred.

As used in the present application, a term "and/or" includes any and all combinations of at least one of listed items.

The terms used in the present application are for a purpose of describing particular embodiments only, and are not intended to limit the present application. As used in the present application, singular forms "a" and "the" are intended to include plural forms as well, unless the context clearly defines otherwise. It should further be understood that terms "includes/comprises (including/comprising)" and/or "made of/consisted of" in the present application are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skills in the art. It should further be understood that terms, such as those defined in common dictionaries, should be construed as having a meaning that is consistent with that in background of the existing art and the present application, and should not be construed as having an idealized or over-formal meaning, unless expressly defined in the present application.

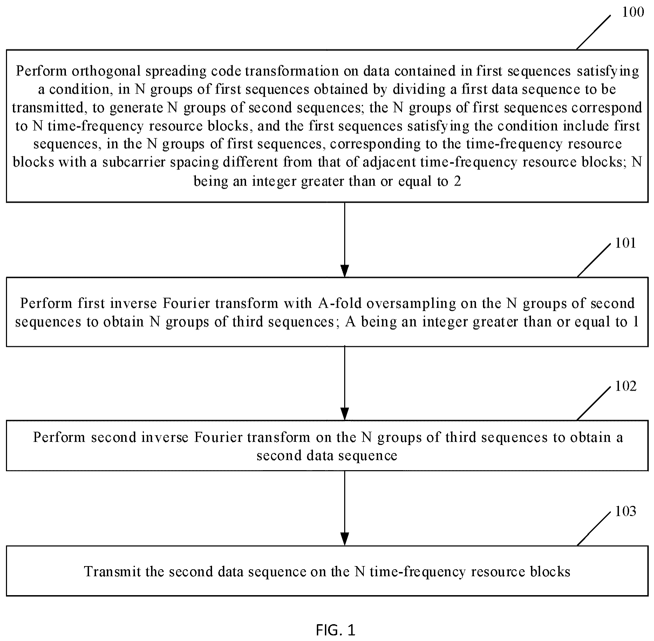

Fig. 1 is a flowchart of a data transmission method provided in an embodiment of the present application.

In a first aspect, referring to Fig. 1, an embodiment of the present application provides a data transmission method, including an operation 100.

At operation 100, performing orthogonal spreading code transformation on data contained in first sequences satisfying a condition, in N groups of first sequences obtained by dividing a first data sequence to be transmitted, to generate N groups of second sequences; the N groups of first sequences correspond to N time-frequency resource blocks, and the first sequences satisfying the condition include the first sequences, in the N groups of first sequences, corresponding to the time-frequency resource blocks with a subcarrier spacing different from that of adjacent time-frequency resource blocks; N being an integer greater than or equal to 2.

In some implementations, the first data sequence to be transmitted includes constellation point-modulated data and R pieces of reference signal data, R being an integer greater than or equal to 0.

In some implementations, the first data sequence to be transmitted is part or all of data to be transmitted in a channel bandwidth.

In some implementations, the N time-frequency resource blocks are part or all of time-frequency resource blocks in the channel bandwidth.

In some implementations, each of the N time-frequency resource blocks corresponds to one subband.

In some implementations, an $n^{th}$ group of first sequences corresponds to an $n^{th}$ time-frequency resource block; n being an integer greater than or equal to 1 and less than or equal to N.

In some implementations, an $n^{th}$ time-frequency resource block corresponding to an $n^{th}$ group of first sequences refers to that data contained in the $n^{th}$ group of first sequences are transmitted on the $n^{th}$ time-frequency resource block.

In some implementations, in the N time-frequency resource blocks, a subcarrier spacing between any adjacent subcarriers contained in any one time-frequency resource block is the same.

In some implementations, the time-frequency resource blocks with a same subcarrier spacing each contain a same number of subcarriers.

In some implementations, the time-frequency resource blocks with different subcarrier spacings contain different numbers of subcarriers.

In some implementations, in the N time-frequency resource blocks, there are at least two time-frequency resource blocks with different subcarrier spacings. For example, there are at least an $a^{th}$ time-frequency resource block and a $b^{th}$ time-frequency resource block, with a subcarrier spacing between subcarriers contained in the $a^{th}$ time-frequency resource block being different from a subcarrier spacing between subcarriers contained in the $b^{th}$ time-frequency resource block; a and b being integers greater than or equal to 1 and less than or equal to N.

In some implementations, in the N time-frequency resource blocks, there are at least two adjacent time-frequency resource blocks with different subcarrier spacings. For example, there are at least an $a^{th}$ time-frequency resource block and an $(a+1)^{th}$ time-frequency resource block, with a subcarrier spacing between subcarriers contained in the $a^{th}$ time-frequency resource block being different from a subcarrier spacing between subcarriers contained in the $(a+1)^{th}$ time-frequency resource block.

In some implementations, in order to reduce interference between the time-frequency resource blocks corresponding to a first group of first sequences and an $N^{th}$ group of first sequences and other time-frequency resource blocks except the N time-frequency resource blocks corresponding to the N groups of first sequences, the first sequences satisfying the condition further include: the first group of first sequences and the $N^{th}$ group of first sequences.

In some implementations, a total number of the groups of first sequences satisfying the condition is greater than or equal to 2, and less than or equal to N.

In some implementations, a subcarrier spacing of a time-frequency resource block corresponding to the first sequences satisfying the condition is different from a subcarrier spacing of a previous time-frequency resource block.

In some implementations, the subcarrier spacing of the time-frequency resource block corresponding to the first sequences satisfying the condition is different from a subcarrier spacing of a next time-frequency resource block.

In some implementations, the subcarrier spacing of the time-frequency resource block corresponding to the first sequences satisfying the condition is different from the subcarrier spacings of the previous time-frequency resource block and the next time-frequency resource block.

In some implementations, a ratio of a total number of pieces of data contained in the first sequences satisfying the condition to a total number of pieces of data contained in a previous group of first sequences is 2 to the power of i; i being an integer greater than or equal to 1.

In some implementations, a ratio of the number of pieces of data contained in the first sequences satisfying the condition to a total number of pieces of data contained in a next group of first sequences is 2 to the power of i.

In some implementations, the ratio of the number of pieces of data contained in the first sequences satisfying the condition to the number of pieces of data contained in the previous group of first sequences is 2 to the power of i, and the ratio of the number of pieces of data contained in the first sequences satisfying the condition to the number of pieces of data contained in the next group of first sequences is 2 to the power of i.

For example, in a case where the subcarrier spacing of the time-frequency resource block corresponding to the first sequences satisfying the condition is different from the subcarrier spacing of the previous time-frequency resource block, the ratio of the number of pieces of data contained in the first sequences satisfying the condition to the number of pieces of data contained in the previous group of first sequences is 2 to the power of i; in a case where the subcarrier spacing of the time-frequency resource block corresponding to the first sequences satisfying the condition is different from the subcarrier spacing of the next time-frequency resource block, the ratio of the number of pieces of data contained in the first sequences satisfying the condition to the number of pieces of data contained in the next group of first sequences is 2 to the power of i; in a case where the subcarrier spacing of the time-frequency resource block corresponding to the first sequences satisfying the condition is different from the subcarrier spacings of the previous time-frequency resource block and the next time-frequency resource block, the ratio of the number of pieces of data contained in the first sequences satisfying the condition to the number of pieces of data contained in the previous group of first sequences is 2 to the power of i, and the ratio of the number of pieces of data contained in the first sequences satisfying the condition to the number of pieces of data contained in the next group of first sequences is 2 to the power of i.

In some implementations, a second sequence corresponding to each group of first sequences not satisfying the condition is the same as the first sequence.

In some implementations, the performing orthogonal spreading code transformation on data contained in first sequences satisfying a condition, in N groups of first sequences obtained by dividing a first data sequence to be transmitted, to generate N groups of second sequences includes: performing orthogonal spreading code transformation on data to be transformed in the data contained in the first sequences satisfying the condition to obtain the second sequence, with the data to be transformed being fore part data, or rear part data, or both the fore part data and the rear part data, or all data, in the data contained in the first sequences satisfying the condition.

In some implementations, in a case where the subcarrier spacing of the time-frequency resource block corresponding to the first sequences satisfying the condition is different from the subcarrier spacing of the previous time-frequency resource block, the data to be transformed is the fore part data or all data; in a case where the subcarrier spacing of the time-frequency resource block corresponding to the first sequences satisfying the condition is different from the subcarrier spacing of the next time-frequency resource block, the data to be transformed is the rear part data or all data; in a case where the subcarrier spacing of the time-frequency resource block corresponding to the first sequences satisfying the condition is different from the subcarrier spacings of the previous time-frequency resource block and the next time-frequency resource block, the data to be transformed is the fore part data and the rear part data, or all data.

In some implementations, the fore part data is first $h1$ pieces of data in the data contained in the first sequences satisfying the condition, the rear part data is last $h2$ pieces of data in the data contained in the first sequences satisfying the condition; $h1$ and $h2$ are integers greater than or equal to 1, and less than or equal to the number of pieces of data contained in the first sequences satisfying the condition.

In some implementations, the data to be transformed excludes reference signal data.

In some implementations, in a case where the data to be transformed includes the reference signal data, the reference signal data in the data to be transformed is to be placed to other positions so that the data to be transformed does not include the reference signal data.

In some implementations, the data to be transformed includes $h$ pieces of data, and data obtained by performing orthogonal spreading code transformation on the data to be transformed includes $hq/p$ pieces of data; $h$ being an integer greater than or equal to 1, $p$ being a total number of groups of first expanding sequences used for the orthogonal spreading code transformation, and $q$ being a length of the first expanding sequence.

In some implementations, the performing orthogonal spreading code transformation on data to be transformed in the data contained in the first sequences satisfying the condition to obtain the second sequence includes: expanding $p$ groups of eight sequences, obtained by dividing the data to be transformed, into $p$ groups of ninth sequences with a length of $hq/p$; $p$ being a total number of groups of first expanding sequences used for the orthogonal spreading code transformation, and $q$ being a length of the first expanding sequence; expanding $p$ groups of first expanding sequences with a length of $q$ into $p$ groups of second expanding sequences with a length of $hq/p$; multiplying corresponding data in a $k^{th}$ group of ninth sequences and a $k^{th}$ group of second expanding sequences to obtain a $k^{th}$ group of tenth sequences; $k$ being an integer greater than or equal to 1, and less than or equal to $p$; performing a weighted summation on $p$ groups of tenth sequences to obtain an eleventh sequence; splicing the eleventh sequence with other data except the data to be transformed in the data contained in the first sequences satisfying the condition to obtain the second sequence.

In some implementations, the performing orthogonal spreading code transformation on data to be transformed in the data contained in the first sequences satisfying the condition to obtain the second sequence includes: multiplying each piece of data in a $k^{th}$ group of eighth sequences in $p$ groups of eighth sequences, obtained by dividing the data to be transformed, by each piece of data in a $k^{th}$ group of first expanding sequences in $p$ groups of first expanding sequences with a length of $q$ to obtain a $k^{th}$ group of tenth sequences; $k$ being an integer greater than or equal to 1 and less than or equal to $p$; performing a weighted summation on $p$ groups of tenth sequences to obtain an eleventh sequence; splicing the eleventh sequence with other data except the data to be transformed in the data contained in the first sequences satisfying the condition to obtain the second sequence.

In some implementations, the first expanding sequence is an orthogonal spreading code.

In some implementations, $p$ is any one of 1, 2 or 3, and $q$ is 4.

In some implementations, in a case where $p$ is 3 and $q$ is 4, the $p$ groups of first expanding sequences are $S1=[C, -C, -C, C]$, $S2=[C, -C, C, -C]$, $S3=[C, C, -C, -C]$; $C$ being an integer greater than or equal to 1.

In some implementations, $C$ is 1.

In some implementations, the data to be transformed is divided into $p$ groups of eighth sequences, each group of eighth sequences including $h/p$ pieces of data, $h/p$ being an integer.

In some implementations, the expanding $p$ groups of eight sequences, obtained by dividing the data to be transformed, into $p$ groups of ninth sequences with a length of $hq/p$ includes: for each group of eighth sequences, repeating each piece of data in the eighth sequences $q$ times, and splicing the pieces of data each repeated $q$ times together to obtain the ninth sequence with the length of $hq/p$. For example, a certain group of eighth sequences is $[a1, a2, a3, a4]$, and $q$ is 4, then the ninth sequence corresponding to the group of eighth sequences is $[a1, a1, a1, a1, a2, a2, a2, a2, a3, a3, a3, a3, a4, a4, a4, a4]$.

In some implementations, the expanding $p$ groups of first expanding sequences with a length of $q$ into $p$ groups of second expanding sequences with a length of $hq/p$ includes: for each group of first expanding sequences, repeating all data in the first expanding sequences $h/p$ times to obtain the second expanding sequence. For example, a certain group of first expanding sequences is $[C, -C, -C, C]$, and $h/p$ is 4, then the second expanding sequence is $[C, -C, -C, C, C, -C, -C, C, C, -C, -C, C, C, -C, -C, C]$.

In some implementations, the multiplying corresponding data in a kth group of ninth sequences and a

$k^{th}$ group of second expanding sequences to obtain a $k^{th}$ group of tenth sequences refers to: multiplying data with a same position index in the $k^{th}$ group of ninth sequences and the $k^{th}$ group of second expanding sequences to obtain the $k^{th}$ group of tenth sequences. For example, a first piece of data in the $k^{th}$ group of ninth sequences and a first piece of data in the $k^{th}$ group of second expanding sequences are multiplied to obtain a first piece of data in the $k^{th}$ group of tenth sequences, a second piece of data in the $k^{th}$ group of ninth sequences and a second piece of data in the $k^{th}$ group of second expanding sequences are multiplied to obtain a second piece of data in the $k^{th}$ group of tenth sequences, and so on.

In some implementations, the multiplying each piece of data in a $k^{th}$ group of eighth sequences in p groups of eighth sequences, obtained by dividing the data to be transformed, by each piece of data in a $k^{th}$ group of first expanding sequences in p groups of first expanding sequences with a length of q to obtain a $k^{th}$ group of tenth sequences refers to: multiplying a first piece of data in the $k^{th}$ group of eighth sequences by a first piece of data in the $k^{th}$ group of first expanding sequences to obtain a first piece of data in the $k^{th}$ group of tenth sequences, multiplying the first piece of data in the $k^{th}$ group of eighth sequences by a second piece of data in the $k^{th}$ group of first expanding sequences to obtain a second piece of data in the $k^{th}$ group of tenth sequences, and so on, until multiplying the first piece of data in the $k^{th}$ group of eighth sequences by a $q^{th}$ piece of data in the $k^{th}$ group of first expanding sequences to obtain a $q^{th}$ piece of data in the $k^{th}$ group of tenth sequences; multiplying a second piece of data in the $k^{th}$ group of eighth sequences by the first piece of data in the $k^{th}$ group of first expanding sequences to obtain a $(q+1)^{th}$ piece of data in the $k^{th}$ group of tenth sequences, multiplying the second piece of data in the $k^{th}$ group of eighth sequences by the second piece of data in the $k^{th}$ group of first expanding sequences to obtain a $(q+2)^{th}$ piece of data in the $k^{th}$ group of tenth sequences, and so on, until multiplying the second piece of data in the $k^{th}$ group of eighth sequences by the $q^{th}$ piece of data in the $k^{th}$ group of first expanding sequences to obtain a $(2q)^{th}$ piece of data in the $k^{th}$ group of tenth sequences; and so on, until multiplying a $(h/p)^{th}$ piece of data in the $k^{th}$ group of eighth sequences by the $q^{th}$ piece of data in the $k^{th}$ group of first expanding sequences to obtain a $(hq/p)^{th}$ piece of data in the $k^{th}$ group of tenth sequences; finally, the $k^{th}$ group of tenth sequences is obtained.

At operation 101, performing first inverse Fourier transform with A-fold oversampling on the N groups of second sequences to obtain N groups of third sequences; A being an integer greater than or equal to 1.

In some implementations, a total number of pieces of data contained in each group of second sequences is 2 to the power of i; i being an integer greater than or equal to 1.

In some implementations, a ratio of the number of pieces of data contained in any two groups of second sequences is 2 to the power of i; i being an integer greater than or equal to 1.

In some implementations, a total number of pieces of data contained in an $n^{th}$ group of second sequences is $k^{'}(n)$.

In some implementations, there are at least two groups of second sequences containing different numbers of pieces of data. For example, there are an $n1^{th}$ group and an $n2^{th}$ group of second sequences, with a total number of pieces of data contained in the $n1^{th}$ group of second sequences being different from a total number of pieces of data contained in the $n2^{th}$ group of second sequences; n1 and n2 being integers greater than or equal to 1, and less than or equal to N.

In some implementations, A is 2.

In some implementations, the performing first inverse Fourier transform with A-fold oversampling on the N groups of second sequences to obtain N groups of third sequences includes: adding data of $\dfrac{k^{'}(n)}{2}$ zeros at two ends of the $n^{th}$ group of second sequences respectively, and performing first inverse Fourier transform on the $n^{th}$ group of second sequences added with the data of zeros to obtain an $n^{th}$ group of third sequences; n being an integer greater than or equal to 1 and less than or equal to N, and k'(n) being a total number of pieces of data contained in the $n^{th}$ group of second sequences.

In some implementations, a total number of inverse Fourier transform points for the first inverse Fourier transform performed on the $n^{th}$ group of second sequences is the same as a total number of pieces of data contained in the $n^{th}$ group of third sequences; n being an integer greater than or equal to 1 and less than or equal to N.

In some implementations, a ratio of numbers of inverse Fourier transform points for the first inverse Fourier transform performed on any two groups of second sequences is 2 to the power of i; i being an integer greater than or equal to 1.

In some implementations, there are at least two groups of second sequences, with different numbers of inverse Fourier transform points for the first inverse Fourier transform performed thereon.

In some implementations, a total number of pieces of data contained in the $n^{th}$ group of third sequences is 2k (n).

In some implementations, a zero-frequency position of the first inverse Fourier transform performed on the $n^{th}$ group of second sequences is within a frequency range of the time-frequency resource block corresponding to the $n^{th}$ group of first sequences; n being an integer greater than or equal to 1 and less than or equal to N.

In some implementations, zero-frequency positions of the first inverse Fourier transform performed on different groups of second sequences are different.

In some implementations, a zero-frequency position of the first inverse Fourier transform performed on the $n^{th}$ group of second sequences is in one of subcarriers contained in the time-frequency resource block corresponding to the $n^{th}$ group of first sequences.

At operation 102, performing second inverse Fourier transform on the N groups of third sequences to obtain a second data sequence.

In some implementations, a total number of pieces of data contained in the third sequence corresponding to the first sequences satisfying the condition is greater than twice a total number of subcarriers contained in the time-frequency resource block corresponding to the first sequences satisfying the condition, a total number of pieces of data contained in the third sequence corresponding to the first sequences not satisfying the condition is twice a total number of subcarriers contained in the time-frequency resource block corresponding to the first sequences not satisfying the condition.

In some implementations, the third sequence corresponding to the first sequences satisfying the condition refers to a third sequence obtained by performing orthogonal spreading code transformation and first inverse Fourier transform with A-fold oversampling on the first sequences satisfying the condition.

In some implementations, a total number of inverse Fourier transform points for the second inverse Fourier transform performed on the N groups of third sequences is greater than N.

In some implementations, in a case where the N groups of third sequences each contain a same number of pieces of data, the performing second inverse Fourier transform on the N groups of third sequences to obtain a second data sequence includes: performing second inverse Fourier transform with C-fold oversampling on N pieces of data consisting of a $j^{th}$ data of the N groups of the third sequences to obtain a $j^{th}$ group of fifth sequences; C being an integer greater than or equal to 1, j being an integer greater than or equal to 1, and less than or equal to B; expanding B groups of fifth sequences into B groups of sixth sequences; a total number of pieces of data contained in the sixth sequences is D times a total number of pieces of data contained in the fifth sequences; D being an integer greater than or equal to 2; splicing the B groups of sixth sequences into the second data sequence.

In some implementations, after expanding the B groups of fifth sequences into the B groups of sixth sequences, and before splicing the B groups of sixth sequences into the second data sequence, the method further includes: performing windowing operation on the B groups of sixth sequences.

The splicing the B groups of sixth sequences into the second data sequence includes: splicing the B groups of sixth sequences subjected to the windowing operation into the second data sequence.

In some implementations, the performing windowing operation on the B groups of sixth sequences refers to multiplying each group of sixth sequences by a preset function.

In some implementations, the preset function is a window function.

In some implementations, the performing second inverse Fourier transform on the N groups of third sequences to obtain a second data sequence includes: performing second inverse Fourier transform on the N groups of third sequences and other data sequences to obtain the second data sequence.

In some implementations, the other data sequences are data sequences except the first data sequence.

In some implementations, the other data sequences are data sequences obtained by performing first inverse Fourier transform with A-fold oversampling on data sequences except the first data sequence.

In some implementations, the other data sequences are data sequences obtained by performing orthogonal spreading code transformation on data sequences except the first data sequence.

In some implementations, the other data sequences are data sequences obtained by performing orthogonal spreading code transformation and first inverse Fourier transform with A-fold oversampling on data sequences except the first data sequence.

In some implementations, in a case where the N groups of third sequences and the other data sequences each contain a same number of pieces of data, the performing second inverse Fourier transform on the N groups of third sequences and other data sequences to obtain the second data sequence includes: performing second inverse Fourier transform with C-fold oversampling on N+1 pieces of data consisting of a $j^{th}$ piece of data of the N groups of third sequences and a $j^{th}$ piece of data of the other data sequences to obtain a $j^{th}$ group of fifth sequences; C being an integer greater than or equal to 1, j being an integer greater than or equal to 1 and less than or equal to B; expanding B groups of fifth sequences into B groups of sixth sequences; a total number of pieces of data contained in the sixth sequences is D times a total number of pieces of data contained in the fifth sequences; D being an integer greater than or equal to 2; splicing the B groups of sixth sequences into the second data sequence.

In some implementations, after performing first inverse Fourier transform with A-fold oversampling on the N groups of second sequences to obtain N groups of third sequences, and before performing second inverse Fourier transform on the N groups of third sequences to obtain the second data sequence, the method further includes: expanding the N groups of third sequences into N groups of fourth sequences; a total number of pieces of data contained in each group of fourth sequences is B, B being a maximum value of a total number of pieces of data contained in the N groups of third sequences.

The performing second inverse Fourier transform on the N groups of third sequences to obtain a second data sequence includes: performing second inverse Fourier transform on the N groups of fourth sequences to obtain the second data sequence.

In some implementations, after performing first inverse Fourier transform with A-fold oversampling on the N groups of second sequences to obtain N groups of third sequences, and before performing second inverse Fourier transform on the N groups of third sequences and other data sequences to obtain the second data sequence, the method further includes: expanding the N groups of third sequences and the other data sequences into N+1 groups of fourth sequences; a total number of pieces of data contained in each group of fourth sequences is B, B being a maximum value of a total number of pieces of data contained in the N groups of third sequences.

The performing second inverse Fourier transform on the N groups of third sequences and other data sequences to obtain the second data sequence includes: performing second inverse Fourier transform on the N+1 groups of fourth sequences to obtain the second data sequence.

In some implementations, the expanding the N groups of third sequences into N groups of fourth sequences includes: in a case where a total number of pieces of data contained in a $k^{th}$ group of third sequences is B, a $k^{th}$ group of fourth sequences is the same as the $k^{th}$ group of third sequences; in a case where the number of pieces of data contained in the $k^{th}$ group of third sequences is less than B, splicing the $k^{th}$ group of third sequences with another $k^{th}$ group of third sequences obtained by performing orthogonal spreading code transformation and first inverse Fourier transform with A-fold oversampling on another first data sequence to be transmitted to obtain the $k^{th}$ group of fourth sequences.

In some implementations, the expanding the N groups of third sequences and other data sequences into N+1 groups of fourth sequences includes: in a case where a total number of pieces of data contained in a $k^{th}$ group of third sequences is B, a $k^{th}$ group of fourth sequences is the same as the $k^{th}$ group of third sequences; in a case where the number of pieces of data contained in the $k^{th}$ group of third sequences is less than B, splicing the $k^{th}$ group of third sequences with another $k^{th}$ group of third sequences, obtained by performing orthogonal spreading code transformation and first inverse Fourier transform with A-fold oversampling on another first data sequence to be transmitted, to obtain the $k^{th}$ group of fourth sequences.

In a case where a total number of pieces of data contained in the other data sequences is B, an $(N+1)^{th}$ group of fourth sequences is the same as the other data sequences; in a case where the number of pieces of data contained in the other data sequences is less than B, splicing the other data sequences with other data to obtain the $(N+1)^{th}$ group of fourth sequences.

In some implementations, the performing second inverse Fourier transform on the N groups of fourth sequences to obtain the second data sequence includes: performing second inverse Fourier transform with C-fold oversampling on N pieces of data consisting of a $j^{th}$ piece of data of the N groups of fourth sequences to obtain a $j^{th}$ group of fifth sequences; C being an integer greater than or equal to 1, j being an integer greater than or equal to 1, and less than or equal to B; expanding B groups of fifth sequences into B groups of sixth sequences; a total number of pieces of data contained in the sixth sequences is D times a total number of pieces of data contained in the fifth sequences; D being an integer greater than or equal to 2; splicing the B groups of sixth sequences into the second data sequence.

In some implementations, the performing second inverse Fourier transform on the N+1 groups of fourth sequences to obtain the second data sequence includes: performing second inverse Fourier transform with C-fold oversampling on N+1 pieces of data consisting of a $j^{th}$ piece of data of the N+1 groups of fourth sequences to obtain a $j^{th}$ group of fifth sequences; C being an integer greater than or equal to 1, j being an integer greater than or equal to 1, and less than or equal to B; expanding B groups of fifth sequences into B groups of sixth sequences; a total number of pieces of data contained in the sixth sequences is D times a total number of pieces of data contained in the fifth sequences; D being an integer greater than or equal to 2; splicing the B groups of sixth sequences into the second data sequence.

In some implementations, each group of fifth sequences corresponds to one sub-symbol.

In some implementations, the expanding B groups of fifth sequences into B groups of sixth sequences includes: repeating a $k1^{th}$ group of fifth sequences E times to obtain a $k1^{th}$ group of sixth sequences; k1 being an integer greater than or equal to 1 and less than or equal to B, E being an integer greater than or equal to 2.

In some implementations, E is 4.

In some implementations, the splicing the B groups of sixth sequences into the second data sequence refers to that, arranging the B groups of sixth sequences in a misaligned manner into B rows, a misaligned interval between a first piece of data in a $(k1+1)^{th}$ row and a first piece of data in a $k1^{th}$ row is half of the number of pieces of data contained in the fifth sequences, and adding up data in a same column of the B rows to obtain the second data sequence.

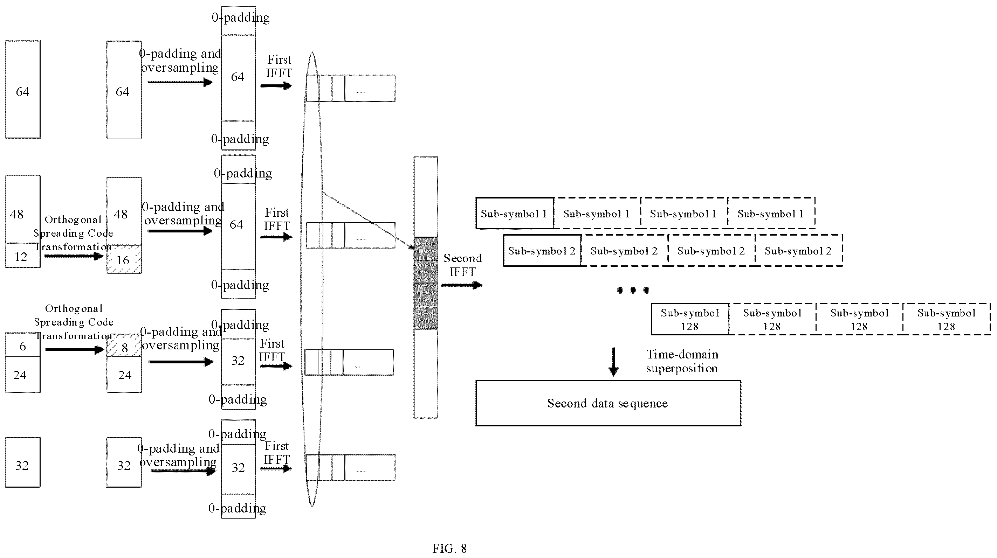

In some implementations, during the B groups of sixth sequences being arranged in a misaligned manner into B rows, a sixth sequence arranged in a $(k2)^{th}$ row is misaligned backward with respect to a sixth sequence arranged in a $(k2-1)^{th}$ row, as shown in Fig. 8; k2 being an integer greater than or equal to 2, and less than or equal to B.

In some implementations, after performing first inverse Fourier transform with A-fold oversampling on the N groups of second sequences to obtain N groups of third sequences, and before performing second inverse Fourier transform on the N groups of third sequences to obtain the second data sequence, the method further includes: performing coefficient correction on the N groups of third sequences to obtain N groups of seventh sequences.

The performing second inverse Fourier transform on the N groups of third sequences to obtain a second data sequence includes: performing second inverse Fourier transform on the N groups of seventh sequences.

In some implementations, the performing coefficient correction on the N groups of third sequences to obtain N groups of seventh sequences includes: multiplying even-numbered groups of third sequences in the N groups of third sequences by corresponding data of a first coefficient vector to obtain the N groups of seventh sequences; or multiplying odd-numbered groups of third sequences in the N groups of third sequences by corresponding data of a second coefficient vector to obtain the N groups of seventh sequences.

In some implementations, the multiplying even-numbered groups of third sequences in the N groups of third sequences by corresponding data of a first coefficient vector to obtain the N groups of seventh sequences refers to, multiplying data with a same position index in the even-numbered groups of third sequences and the first coefficient vector to obtain corresponding seventh sequences, and odd-numbered groups of third sequences being the same as corresponding seventh sequences.

In some implementations, the multiplying odd-numbered groups of third sequences in the N groups of third sequences by corresponding data of a second coefficient vector to obtain the N groups of seventh sequences refers to, multiplying data with a same position index in the odd-numbered groups of third sequences and the second coefficient vector to obtain corresponding seventh sequences, and even-numbered groups of third sequences being the same as corresponding seventh sequences.

In some implementations, the first coefficient vector is $[1,-1,1,...,(-1)^{2k'(n)-1}]$.

In some implementations, the second coefficient vector is $[-1,1,-1,...,(-1)^{2k'(n)}]$.

At operation 103, transmitting the second data sequence on the N time-frequency resource blocks.

In some implementations, after performing second inverse Fourier transform on the N groups of third sequences to obtain the second data sequence, and before transmitting the second data sequence on the N time-frequency resource blocks, the method further includes: filtering the second data sequence.

The transmitting the second data sequence on the N time-frequency resource blocks includes: transmitting filtered second data sequence on the N time-frequency resource blocks.

In some implementations, the filtering is single-phase filtering or polyphase filtering.

In some implementations, a filtering function used for polyphase filtering includes: a root raised cosine function, a raised cosine function, a rectangular function, an Isotropic Orthogonal Transform Algorithm (IOTA) function, or the like.

In the data transmission method provided in the present application, the orthogonal spreading code transformation is performed on the data contained in the first sequences satisfying the condition, since performing orthogonal spreading code transformation on the data does not change the bandwidth occupied by the data, the interference between the time-frequency resource blocks corresponding to the first sequences satisfying the condition is reduced without changing the bandwidth occupied by the first data sequence to be transmitted, so that spectrum efficiency is improved; and the N groups of second sequences obtained after the orthogonal spreading code transformation are then subjected to inverse Fourier inverse transform twice, thereby facilitating subsequent filtering, resulting in a reduced complexity and a reduced processing time delay.

In order to provide a clearer illustration of a specific implementation process of the data transmission method provided in the embodiment of the present application, several examples are listed below for explanation, and are not used to limit the scope of protection for the embodiment of the present application.

Example 1

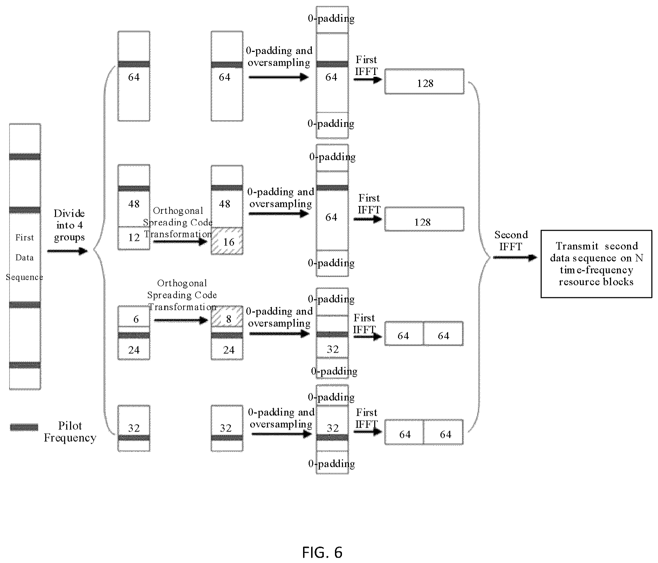

In the example, a first data sequence to be transmitted is divided into four groups of first sequences, a first group of first sequences contains 64 pieces of data, a second group of first sequences contains 60 pieces of data, a third group of first sequences contains 30 pieces of data, a fourth group of first sequences contains 32 pieces of data, as shown in Fig. 6.

The data in the first group and the second group of first sequences are transmitted on the time-frequency resource blocks with a subcarrier spacing of 15kHz, and the data in the third group and the fourth group of first sequences are transmitted on the time-frequency resource blocks with a subcarrier spacing of 30 kHz.

In order to suppress interference between the time-frequency resource blocks with different subcarrier spacings, orthogonal spreading code transformation is respectively performed on last 12 pieces of data in the data contained in the second group of first sequences and first 6 pieces of data in the data contained in the third group of first sequences, and a specific process is as follows.

First expanding sequences with p=3 and q=4 are selected, i.e., the three groups of first expanding sequences respectively are: [1,-1,-1,1], [1,-1,1,-1], [1,1,-1,-1].

For the second group of first sequences, the last 12 pieces of data are divided into three groups of eighth sequences, a first group of eight sequences is [a1, a2, a3, a4], a second group of eighth sequences is [b1, b2, b3, b4], a third group of eighth sequences is [c1, c2, c3, c4].

Each piece of data in the first group of eighth sequences [a1, a2, a3, a4] is multiplied by the first group of first expanding sequences [1,-1,-1,1] and then spliced to obtain a first group of tenth sequences, i.e., [a1, -a1, -a1, a1, a2, -a2, -a2, a2, a3, -a3, -a3, a3, a4, -a4, -a4, a4].

Each piece of data in the second group of eighth sequences [b1, b2, b3, b4] is multiplied by the second group of first expanding sequences [1,-1,1,-1] and then spliced to obtain a second group of tenth sequences, i.e., [b1, -b1, b1, -b1, b2, -b2, b2, -b2, b3, -b3, b3, -b3, b4, -b4, b4, -b4].

Each piece of data in the third group of eighth sequences [c1, c2, c3, c4] is multiplied by the third group of first expanding sequences [1,1,-1,-1] and then spliced to obtain a third group of tenth sequences, i.e., [c1, c1, -c1, -c1, c2, c2, -c2, -c2, c3, c3, -c3, -c3, c4, c4, -c4, -c4].

Weight factors P(1), P(2), and P(3) are respectively configured for the above three groups of tenth sequences, and values of P(1), P(2), and P(3) may be flexibly set according to an application scenario, for example, P(1)=P(2)=P(3)=1 is selected. The three groups of tenth sequences are respectively multiplied by corresponding weight factors, and then added to obtain an eleventh sequence including 16 pieces of data, and the 16 pieces of data are spliced with rest 48 pieces of data of the second group of first sequences to obtain a second group of second sequences including 64 pieces of data.

For the third group of first sequences, the first expanding sequences with p=3 and q=4 are also selected, i.e., the three groups of first expanding sequences respectively are: [1,-1,-1,1], [1,-1,1,-1], [1,1,-1,-1].

For the third group of first sequences, the first 6 pieces of data are divided into three groups of eighth sequences, a first group of eighth sequences is [d1, d2], a second group of eighth sequences is [e1, e2], a third group of eighth sequences is [f1, f2].

Each piece of data in the first group of eighth sequences [d2, d2] is multiplied by the first group of first expanding sequences [1,-1,-1,1] and then spliced to obtain a first group of tenth sequences, i.e., [d1, -d1, -d1, d1, d2, -d2, -d2, d2].

Each piece of data in the second group of eighth sequences [e1, e2] is multiplied by the second group of first expanding sequences [1,-1,1,-1] and then spliced to obtain a second group of tenth sequences, i.e., [e1, -e1, e1, -e1, e2, -e2, e2, -e2].

Each piece of data in the third group of eighth sequences [f1, f2] is multiplied by the third group of first expanding sequences [1,1,-1,-1] and then spliced to obtain a third group of tenth sequences, i.e., [f1, f1, -f1, -f1, f2, f2, -f2, -f2].

Weight factors P(1), P(2), and P(3) are respectively configured for the above three groups of tenth sequences, and values of P(1), P(2), and P(3) may be flexibly set according to an application scenario, for example, P(1)=P(2)=P(3)=1 is selected. The three groups of tenth sequences are respectively multiplied by corresponding weight factors, and then added to obtain an eleventh sequence including 8 pieces of data, and the 8 pieces of data are spliced with rest 24 pieces of data of the third group of first sequences to obtain a third group of second sequences including 32 pieces of data.

For outer edges of the first group and the fourth group of first sequences, orthogonal spreading code transformation may be or not be performed, and in the example, a case where orthogonal spreading code transformation being not performed on the outer edges of the first group and the fourth group of first sequences is selected, thus the first group of first sequences is the same as the first group of second sequences, the fourth group of first sequences is the same as the fourth group of second sequences.

First inverse Fourier transform with 2-fold oversampling is performed on the first group of second sequences to obtain a first group of third sequences, a total number of inverse Fourier transform points is 128, and a total number of pieces of data contained in the first group of third sequences is 128.

First inverse Fourier transform with 2-fold oversampling is performed on the second group of second sequences to obtain a second group of third sequences, a total number of inverse Fourier transform points is 128, a total number of pieces of data contained in the second group of third sequences is 128.

First inverse Fourier transform with 2-fold oversampling is performed on the third group of second sequences to obtain a third group of third sequences, a total number of inverse Fourier transform points is 64, a total number of pieces of data contained in the third group of third sequences is 64.

First inverse Fourier transform with 2-fold oversampling is performed on the fourth group of second sequences to obtain a fourth group of third sequences, a total number of inverse Fourier transform points is 64, a total number of pieces of data contained in the fourth group of third sequences is 64.

The first group of third sequences is used as a first group of fourth sequences, and the second group of third sequences is used as a second group of fourth sequences.

The third group of third sequences are spliced with another third group of third sequences, obtained by performing orthogonal spreading code transformation and first inverse Fourier transform with 2-fold oversampling on another first data sequence to be transmitted, to obtain a third group of fourth sequences.

The fourth group of third sequences are spliced with another fourth group of third sequences, obtained by performing orthogonal spreading code transformation and first inverse Fourier transform with 2-fold oversampling on another first data sequence to be transmitted, to obtain a fourth group of fourth sequences.

Second inverse Fourier transform is performed on the four groups of fourth sequences to obtain a second data sequence.

The second data sequence is transmitted on the N time-frequency resource blocks.

Example 2

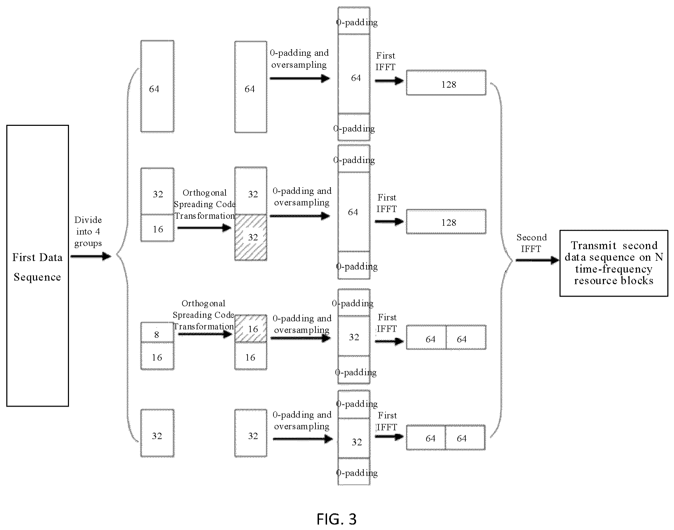

In the example, a first data sequence to be transmitted is divided into four groups of first sequences, a first group of first sequences contains 64 pieces of data, a second group of first sequences contains 48 pieces of data, a third group of first sequences contains 24 pieces of data, a fourth group of first sequences contains 32 pieces of data, as shown in Fig. 3.

The data in the first group and the second group of first sequences are transmitted on the time-frequency resource blocks with a subcarrier spacing of 15kHz, and the data in the third group and the fourth group of first sequences are transmitted on the time-frequency resource blocks with a subcarrier spacing of 30 kHz.

In order to suppress interference between the time-frequency resource blocks with different subcarrier spacings, orthogonal spreading code transformation is respectively performed on last 16 pieces of data in the data contained in the second group of first sequences and first 8 pieces of data in the data contained in the third group of first sequences, and a specific process is as follows.

First expanding sequences with p=2 and q=4 are selected, i.e., the two groups of first expanding sequences respectively are: [1,-1,-1,1], [1,-1,1,-1].

For the second group of first sequences, the last 16 pieces of data are divided into two groups of eighth sequences, a first group of eighth sequences is [a1, a2, a3, ..., a8], a second group of eighth sequences is [b1, b2, b3, ..., b8].

Each piece of data in the first group of eighth sequences [a1, a2, a3, ..., a8] is multiplied by the first group of first expanding sequences [1,-1,-1,1] and then spliced to obtain a first group of tenth sequences, i.e., [a1, -a1, -a1, a1, a2, -a2, -a2, a2, a3, -a3, -a3, a3, ..., a8, -a8, -a8, a8].

Each piece of data in the second group of eighth sequences [b1, b2, b3, ..., b8] is multiplied by the second group of first expanding sequences [1,-1,1,-1] and then spliced to obtain a second group of tenth sequences, i.e., [b1, -b1, b1, -b1, b2, -b2, b2, -b2, b3, -b3, b3, - b3, ..., b8, -b8, b8, -b8].

Weight factors P(1) and P(2) are respectively configured for the above two groups of tenth sequences, and values of P(1) and P(2) may be flexibly set according to an application scenario, for example, P(1)=P(2)=1 is selected. The two groups of tenth sequences are respectively multiplied by corresponding weight factors, and then added to obtain an eleventh sequence including 32 pieces of data, and the 32 pieces of data are spliced with rest 32 pieces of data of the second group of first sequences to obtain a second group of second sequences including 64 pieces of data.

For the third group of first sequences, the first expanding sequences with p=2 and q=4 are also selected, i.e., the two groups of first expanding sequences respectively are: [1,-1,-1,1], [1,-1,1,-1].

For the third group of first sequences, the first 8 pieces of data are divided into two groups of eighth sequences, a first group of eighth sequences is [c1, c2, c3, c4], a second group of eighth sequences is [d1, d2, d3, d4].

Each piece of data in the first group of eighth sequences [c1, c2, c3, c4] is multiplied by the first group of first expanding sequences [1,-1,-1,1] and then spliced to obtain a first group of tenth sequences, i.e., [c1, -c1, -c1, c1, c2, -c2, -c2, c2, c3, -c3, -c3, c3, c4, -c4, -c4, c4]

Each piece of data in the second group of eighth sequences[d1, d2, d3, d4] is multiplied by the second group of first expanding sequences [1,-1,1,-1] and then spliced to obtain a second group of tenth sequences, i.e., [d1, -d1, d1, -d1, d2, -d2, d2, -d2, d3, -d3, d3, -d3, d4, - d4, d4, -d4].

Weight factors P(1) and P(2) are respectively configured for the above two groups of tenth sequences, and values of P(1) and P(2) may be flexibly set according to an application scenario, for example, P(1)=P(2)=1 is selected. The two groups of tenth sequences are respectively multiplied by corresponding weight factors, and then added to obtain an eleventh sequence including 16 pieces of data, and the 16 pieces of data are spliced with rest 16 pieces of data of the third group of first sequences to obtain a third group of second sequences including 32 pieces of data.

In the example, the first group of first sequences is the same as a first group of second sequences, the fourth group of first sequences is the same as a fourth group of second sequences.

First inverse Fourier transform with 2-fold oversampling is performed on the first group of second sequences to obtain a first group of third sequences, a total number of inverse Fourier transform points is 128, and a total number of pieces of data contained in the first group of third sequences is 128.

First inverse Fourier transform with 2-fold oversampling is performed on the second group of second sequences to obtain a second group of third sequences, a total number of inverse Fourier transform points is 128, and a total number of pieces of data contained in the second group of third sequences is 128.

First inverse Fourier transform with 2-fold oversampling is performed on the third group of second sequences to obtain a third group of third sequences, a total number of inverse Fourier transform points is 64, and a total number of pieces of data contained in the third group of third sequences is 64.

First inverse Fourier transform with 2-fold oversampling is performed on the fourth group of second sequences to obtain a fourth group of third sequences, a total number of inverse Fourier transform points is 64, and a total number of pieces of data contained in the fourth group of third sequences is 64.

The first group of third sequences is used as a first group of fourth sequences, and the second group of third sequences is used as a second group of fourth sequences.

The third group of third sequences are spliced with another third group of third sequences, obtained by performing orthogonal spreading code transformation and first inverse Fourier transform with 2-fold oversampling on another first data sequence to be transmitted, to obtain a third group of fourth sequences.

The fourth group of third sequences are spliced with another fourth group of third sequences, obtained by performing orthogonal spreading code transformation and first inverse Fourier transform with 2-fold oversampling on another first data sequence to be transmitted, to obtain a fourth group of fourth sequences.

Second inverse Fourier transform is performed on the four groups of fourth sequences to obtain a second data sequence.

The second data sequence is transmitted on the N time-frequency resource blocks.

Example 3

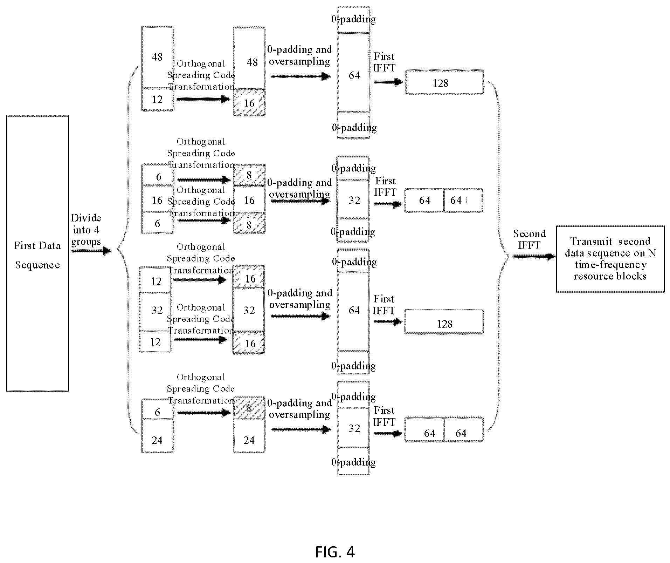

In the example, a first data sequence to be transmitted is divided into four groups of first sequences, a first group of first sequences contains 60 pieces of data, a second group of first sequences contains 28 pieces of data, a third group of first sequences contains 56 pieces of data, a fourth group of first sequences contains 30 pieces of data, as shown in Fig. 4.

The data in the first group and the third group of first sequences are transmitted on the time-frequency resource blocks with a subcarrier spacing of 15kHz, and the data in the second group and the fourth group of first sequences are transmitted on the time-frequency resource blocks with a subcarrier spacing of 30 kHz.

In order to suppress interference between the time-frequency resource blocks with different subcarrier spacings, orthogonal spreading code transformation is respectively performed on last 12 pieces of data in the data contained in the first group of first sequences, first 6 pieces of data and last 6 pieces of data in the data contained in the second group of first sequences, first 12 pieces of data and last 12 pieces of data in the data contained in the third group of first sequences, and first 6 pieces of data in the data contained in the fourth group of first sequences, and a specific process is as follows.

First expanding sequences with p=3 and q=4 are selected, i.e., the three groups of first expanding sequences respectively are: [1,-1,-1,1], [1,-1,1,-1], [1,1,-1,-1].

For the first group of first sequences, the last 12 pieces of data are divided into three groups of eighth sequences, a first group of eight sequences is [a1, a2, a3, a4], a second group of eighth sequences is [b1, b2, b3, b4], a third group of eighth sequences is [c1, c2, c3, c4].

Each piece of data in the first group of eighth sequences [a1, a2, a3, a4] is multiplied by the first group of first expanding sequences [1,-1,-1,1] and then spliced to obtain a first group of tenth sequences, i.e., [a1, -a1, -a1, a1, a2, -a2, -a2, a2, a3, -a3, -a3, a3, a4, -a4, -a4, a4].

Each piece of data in the second group of eighth sequences [b1, b2, b3, b4] is multiplied by the second group of first expanding sequences [1,-1,1,-1] and then spliced to obtain a second group of tenth sequences, i.e., [b1, -b1, b1, -b1, b2, -b2, b2, -b2, b3, -b3, b3, -b3, b4, - b4, b4, -b4].

Each piece of data in the third group of eighth sequences [c1, c2, c3, c4] is multiplied by the third group of first expanding sequences [1,1,-1,-1] and then spliced to obtain a third group of tenth sequences, i.e., [c1, c1, -c1, -c1, c2, c2, -c2, -c2, c3, c3, -c3, -c3, c4, c4, -c4, -c4].

Weight factors P(1), P(2), and P(3) are respectively configured for the above three groups of tenth sequences, and values of P(1), P(2), and P(3) may be flexibly set according to an application scenario, for example, P(1)=P(2)=P(3)=1 is selected. The three groups of tenth sequences are respectively multiplied by corresponding weight factors, and then added to obtain an eleventh sequence including 16 pieces of data, and the 16 pieces of data are spliced with rest 48 pieces of data of the first group of first sequences to obtain a first group of second sequences including 64 pieces of data.

For the second group of first sequences, the first expanding sequences with p=3 and q=4 are also selected, i.e., the three groups of first expanding sequences respectively are: [1,-1,-1,1], [1,-1,1,-1], [1,1,-1,-1].

For the second group of first sequences, the first 6 pieces of data are divided into three groups of eighth sequences, a first group of eighth sequences is [d1, d2], a second group of eighth sequences is [e1, e2], a third group of eighth sequences is [f1, f2].

Each piece of data in the first group of eighth sequences [d2, d2] is multiplied by the first group of first expanding sequences [1,-1,-1,1] and then spliced to obtain a first group of tenth sequences, i.e., [d1, -d1, -d1, d1, d2, -d2, -d2, d2].

Each piece of data in the second group of eighth sequences [e1, e2] is multiplied by the second group of first expanding sequences [1,-1,1,-1] and then spliced to obtain a second group of tenth sequences, i.e., [e1, -e1, e1, -e1, e2, -e2, e2, -e2].

Each piece of data in the third group of eighth sequences [f1, f2] is multiplied by the third group of first expanding sequences [1,1,-1,-1] and then spliced to obtain a third group of tenth sequences, i.e., [f1, f1, -f1, -f1, f2, f2, -f2, -f2].

Weight factors P(1), P(2), and P(3) are respectively configured for the above three groups of tenth sequences, and values of P(1), P(2), and P(3) may be flexibly set according to an application scenario, for example, P(1)=P(2)=P(3)=1 is selected. The three groups of tenth sequences are respectively multiplied by corresponding weight factors, and then added to obtain an eleventh sequence including 8 pieces of data.

For the second group of first sequences, the last 6 pieces of data are divided into three groups of eighth sequences, a first group of eighth sequences is [g1, g2], a second group of eighth sequences is [h1, h2], a third group of eighth sequences is [i1, i2].

Each piece of data in the first group of eighth sequences [g2, g2] is multiplied by the first group of first expanding sequences [1,-1,-1,1] and then spliced to obtain a first group of tenth sequences, i.e., [g1, -g1, -g1, g1, g2, -g2, -g2, g2].

Each piece of data in the second group of eighth sequences [h1, h2] is multiplied by the second group of first expanding sequences [1,-1,1,-1] and then spliced to obtain a second group of tenth sequences, i.e., [h1, -h1, h1, -h1, h2, -h2, h2, -h2].

Each piece of data in the third group of eighth sequences [i1, i2] is multiplied by the third group of first expanding sequences [1,1,-1,-1] and then spliced to obtain a third group of tenth sequences, i.e., [i1, i1, -i1, -i1, i2, i2, -i2, -i2].

Weight factors P(1), P(2), and P(3) are respectively configured for the above three groups of tenth sequences, and values of P(1), P(2), and P(3) may be flexibly set according to an application scenario, for example, P(1)=P(2)=P(3)=1 is selected. The three groups of tenth sequences are respectively multiplied by corresponding weight factors, and then added to obtain an eleventh sequence including 8 pieces of data.

The 8 pieces of data obtained by performing orthogonal spreading code transformation on the first 6 pieces of data of the second group of first sequences are spliced with rest 16 pieces of data, and the 8 pieces of data obtained by performing orthogonal spreading code transformation on the last 6 pieces of data to obtain a second group of second sequences including 32 pieces of data.

Similarly, orthogonal spreading code transformation is performed on the first 12 pieces of data of the third group of first sequences to obtain 16 pieces of data, orthogonal spreading code transformation is performed on the last 12 pieces of data of the third group of first sequences to obtain 16 pieces of data.

The 16 pieces of data obtained by performing orthogonal spreading code transformation on the first 12 pieces of data of the third group of first sequences are spliced with rest 32 pieces of data, and the 16 pieces of data obtained by performing orthogonal spreading code transformation on the last 12 pieces of data to obtain a third group of second sequences including 64 pieces of data.

Similarly, orthogonal spreading code transformation is performed on the first 6 pieces of data of the fourth group of first sequences to obtain 8 pieces of data.

The 8 pieces of data obtained by performing orthogonal spreading code transformation on the first 6 pieces of data of the second group of first sequences are spliced with rest 24 pieces of data to obtain a fourth group of second sequences including 32 pieces of data.

First inverse Fourier transform with 2-fold oversampling is performed on the first group of second sequences to obtain a first group of third sequences, a total number of inverse Fourier transform points is 128, and a total number of pieces of data contained in the first group of third sequences is 128.

First inverse Fourier transform with 2-fold oversampling is performed on the second group of second sequences to obtain a second group of third sequences, a total number of inverse Fourier transform points is 64, and a total number of pieces of data contained in the second group of third sequences is 64.

First inverse Fourier transform with 2-fold oversampling is performed on the third group of second sequences to obtain a third group of third sequences, a total number of inverse Fourier transform points is 128, and a total number of pieces of data contained in the third group of third sequences is 128.

First inverse Fourier transform with 2-fold oversampling is performed on the fourth group of second sequences to obtain a fourth group of third sequences, a total number of inverse Fourier transform points is 64, and a total number of pieces of data contained in the fourth group of third sequences is 64.

The first group of third sequences is used as a first group of fourth sequences.

The second group of third sequences are spliced with another second group of third sequences, obtained by performing orthogonal spreading code transformation and first inverse Fourier transform with 2-fold oversampling on another first data sequence to be transmitted, to obtain a second group of fourth sequences.

The third group of third sequences is used as a third group of fourth sequences.

The fourth group of third sequences are spliced with another third group of third sequences, obtained by performing orthogonal spreading code transformation and first inverse Fourier transform with 2-fold oversampling on another first data sequence to be transmitted, to obtain a fourth group of fourth sequences.

Second inverse Fourier transform is performed on the four groups of fourth sequences to obtain a second data sequence.

The second data sequence is transmitted on the N time-frequency resource blocks.

Example 4

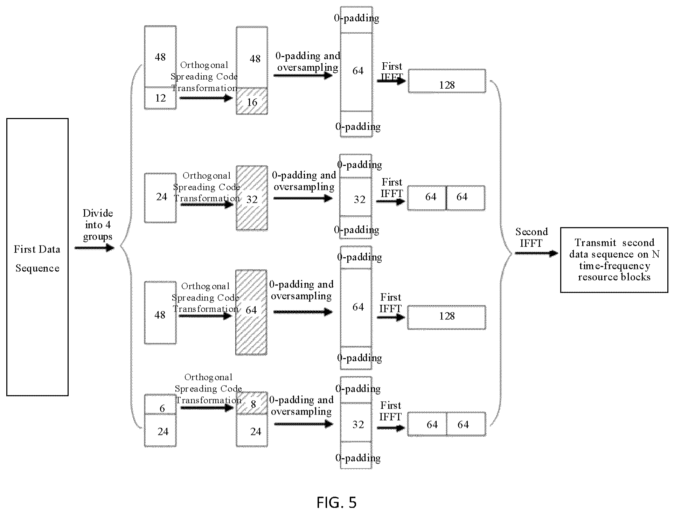

In the example, a first data sequence to be transmitted is divided into four groups of first sequences, a first group of first sequences contains 60 pieces of data, a second group of first sequences contains 24 pieces of data, a third group of first sequences contains 48 pieces of data, a fourth group of first sequences contains 30 pieces of data, as shown in Fig. 5.

The data in the first group and the second group of first sequences are transmitted on the time-frequency resource blocks with a subcarrier spacing of 15kHz, and the data in the third group and the fourth group of first sequences are transmitted on the time-frequency resource blocks with a subcarrier spacing of 30 kHz.

In order to suppress interference between the time-frequency resource blocks with different subcarrier spacings, orthogonal spreading code transformation is respectively performed on last 12 pieces of data in the data contained in the first group of first sequences, all the data contained in the second group of first sequences, all the data contained in the third group of first sequences, and first 6 pieces of data in the data contained in the fourth group of first sequences, and a specific process is as follows.

First expanding sequences with p=3 and q=4 is selected, i.e., the three groups of first expanding sequences respectively are: [1,-1,-1,1], [1,-1,1,-1], [1,1,-1,-1].

Orthogonal spreading code transformation is performed on the last 12 pieces of data of the first group of first sequences to obtain 16 pieces of data, which are spliced with rest 48 pieces of data to obtain a first group of second sequences including 64 pieces of data.

Orthogonal spreading code transformation is performed on 24 pieces of data of the second group of first sequences to obtain 32 pieces of data, so that a second group of second sequences includes 32 pieces of data.

Orthogonal spreading code transformation is performed on 48 pieces of data of the third group of first sequences to obtain 64 pieces of data, so that a third group of second sequences includes 64 pieces of data.

Orthogonal spreading code transformation is performed on the first 6 pieces of data of the fourth group of first sequences to obtain 8 pieces of data, which are spliced with rest 24 pieces of data to obtain a second group of second sequences including 32 pieces of data.

First inverse Fourier transform with 2-fold oversampling is performed on the first group of second sequences to obtain a first group of third sequences, a total number of inverse Fourier transform points is 128, and a total number of pieces of data contained in the first group of third sequences is 128.

First inverse Fourier transform with 2-fold oversampling is performed on the second group of second sequences to obtain a second group of third sequences, a total number of inverse Fourier transform points is 64, and a total number of pieces of data contained in the second group of third sequences is 64.

First inverse Fourier transform with 2-fold oversampling is performed on the third group of second sequences to obtain a third group of third sequences, a total number of inverse Fourier transform points is 128, and a total number of pieces of data contained in the third group of third sequences is 128.

First inverse Fourier transform with 2-fold oversampling is performed on the fourth group of second sequences to obtain a fourth group of third sequences, a total number of inverse Fourier transform points is 64, and a total number of pieces of data contained in the fourth group of third sequences is 64.

The first group of third sequences is used as a first group of fourth sequences.

The second group of third sequences are spliced with another second group of third sequences, obtained by performing orthogonal spreading code transformation and first inverse Fourier transform with 2-fold oversampling on another first data sequence to be transmitted, to obtain a second group of fourth sequences.

The third group of third sequences is used as a third group of fourth sequences.

The fourth group of third sequences are spliced with another fourth group of third sequences, obtained by performing orthogonal spreading code transformation and first inverse Fourier transform with 2-fold oversampling on another first data sequence to be transmitted, to obtain a fourth group of fourth sequences.

Second inverse Fourier transform is performed on the four groups of fourth sequences to obtain a second data sequence.

The second data sequence is transmitted on the N time-frequency resource blocks.

Example 5

In the example, a first data sequence to be transmitted is divided into four groups of first sequences, a first group of first sequences contains 64 pieces of data, a second group of first sequences contains 60 pieces of data, a third group of first sequences contains 30 pieces of data, a fourth group of first sequences contains 32 pieces of data, as shown in Fig. 6.

The data in the first group and the second group of first sequences are transmitted on the time-frequency resource blocks with a subcarrier spacing of 15kHz, and the data in the third group and the fourth group of first sequences are transmitted on the time-frequency resource blocks with a subcarrier spacing of 30 kHz.

In order to suppress interference between the time-frequency resource blocks with different subcarrier spacings, orthogonal spreading code transformation is respectively performed on last 12 pieces of data in the data contained in the second group of first sequences and first 6 pieces of data in the data contained in the third group of first sequences, part of data in each group are pilot frequencies, and the pilot frequencies are not located at the positions of the data to be performed the orthogonal spreading code transformation thereon. A specific process is as follows.

First expanding sequences with p=3 and q=4 are selected, i.e., the three groups of first expanding sequences respectively are: [1,-1,-1,1], [1,-1,1,-1], [1,1,-1,-1].

After the orthogonal spreading code transformation, a total number of pieces of data contained in a first group of second sequences is 64, a total number of pieces of data contained in a second group of second sequences is 64, a total number of pieces of data contained in a third group of second sequences is 32, and a total number of pieces of data contained in a fourth group of second sequences is 32.

First inverse Fourier transform with 2-fold oversampling is performed on the first group of second sequences to obtain a first group of third sequences, a total number of inverse Fourier transform points is 128, and a total number of pieces of data contained in the first group of third sequences is 128.

First inverse Fourier transform with 2-fold oversampling is performed on the second group of second sequences to obtain a second group of third sequences, a total number of inverse Fourier transform points is 128, and a total number of pieces of data contained in the second group of third sequences is 128.

First inverse Fourier transform with 2-fold oversampling is performed on the third group of second sequences to obtain a third group of third sequences, a total number of inverse Fourier transform points is 64, and a total number of pieces of data contained in the third group of third sequences is 64.

First inverse Fourier transform with 2-fold oversampling is performed on the fourth group of second sequences to obtain a fourth group of third sequences, a total number of inverse Fourier transform points is 64, and a total number of pieces of data contained in the fourth group of third sequences is 64.

The first group of third sequences is used as a first group of fourth sequences, and the second group of third sequences is used as a second group of fourth sequences.

The third group of third sequences are spliced with another third group of third sequences, obtained by performing orthogonal spreading code transformation and first inverse Fourier transform with 2-fold oversampling on another first data sequence to be transmitted, to obtain a third group of fourth sequences.

The fourth group of third sequences are spliced with another fourth group of third sequences, obtained by performing orthogonal spreading code transformation and first inverse Fourier transform with 2-fold oversampling on another first data sequence to be transmitted, to obtain a fourth group of fourth sequences.

Second inverse Fourier transform is performed on the four groups of fourth sequences to obtain a second data sequence.

The second data sequence is transmitted on the N time-frequency resource blocks.

Example 6

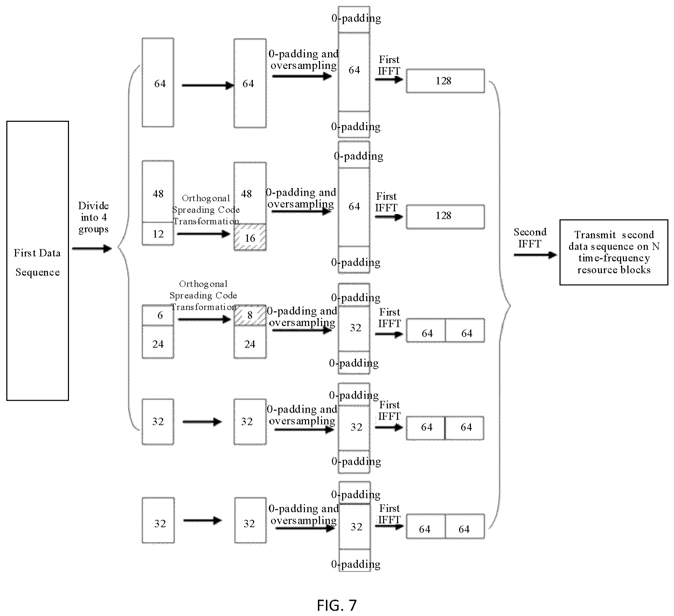

In the example, a first data sequence to be transmitted is divided into four groups of first sequences, a first group of first sequences contains 64 pieces of data, a second group of first sequences contains 60 pieces of data, a third group of first sequences contains 30 pieces of data, a fourth group of first sequences contains 32 pieces of data, as shown in Fig. 7.

The data in the first group and the second group of first sequences are transmitted on the time-frequency resource blocks with a subcarrier spacing of 15kHz, and the data in the third group and the fourth group of first sequences are transmitted on the time-frequency resource blocks with a subcarrier spacing of 30 kHz.

In order to suppress interference between the time-frequency resource blocks with different subcarrier spacings, orthogonal spreading code transformation is respectively performed on last 12 pieces of data in the data contained in the second group of first sequences and first 6 pieces of data in the data contained in the third group of first sequences, and a specific process is as follows.

First expanding sequences with p=3 and q=4 are selected, i.e., the three groups of first expanding sequences respectively are: [1,-1,-1,1], [1,-1,1,-1], [1,1,-1,-1].

After the orthogonal spreading code transformation, a total number of pieces of data contained in a first group of second sequences is 64, a total number of pieces of data contained in a second group of second sequences is 64, a total number of pieces of data contained in a third group of second sequences is 32, a total number of pieces of data contained in a fourth group of second sequences is 32.

First inverse Fourier transform with 2-fold oversampling is performed on the first group of second sequences to obtain a first group of third sequences, a total number of inverse Fourier transform points is 128, and a total number of pieces of data contained in the first group of third sequences is 128.

First inverse Fourier transform with 2-fold oversampling is performed on the second group of second sequences to obtain a second group of third sequences, a total number of inverse Fourier transform points is 128, and a total number of pieces of data contained in the second group of third sequences is 128.

First inverse Fourier transform with 2-fold oversampling is performed on the third group of second sequences to obtain a third group of third sequences, a total number of inverse Fourier transform points is 64, and a total number of pieces of data contained in the third group of third sequences is 64.

First inverse Fourier transform with 2-fold oversampling is performed on the fourth group of second sequences to obtain a fourth group of third sequences, a total number of inverse Fourier transform points is 64, and a total number of pieces of data contained in the fourth group of third sequences is 64.

The first group of third sequences is used as a first group of fourth sequences, and the second group of third sequences is used as a second group of fourth sequences.

The third group of third sequences are spliced with another third group of third sequences, obtained by performing orthogonal spreading code transformation and first inverse Fourier transform with 2-fold oversampling on another first data sequence to be transmitted, to obtain a third group of fourth sequences.

The fourth group of third sequences are spliced with another fourth group of third sequences, obtained by performing orthogonal spreading code transformation and first inverse Fourier transform with 2-fold oversampling on another first data sequence to be transmitted, to obtain a fourth group of fourth sequences.

Second inverse Fourier transform is performed on the four groups of fourth sequences and other data to obtain a second data sequence, the other data refer to data sequences obtained by performing the first inverse Fourier transform with 2-fold oversampling on the data sequences except the first data sequence.

The second data sequence is transmitted on the N time-frequency resource blocks.

Example 7

In the example, a first data sequence to be transmitted is divided into four groups of first sequences, a first group of first sequences contains 64 pieces of data, a second group of first sequences contains 60 pieces of data, a third group of first sequences contains 30 pieces of data, a fourth group of first sequences contains 32 pieces of data, as shown in Fig. 8.

The data in the first group and the second group of first sequences are transmitted on the time-frequency resource blocks with a subcarrier spacing of 15kHz, and the data in the third group and the fourth group of first sequences are transmitted on the time-frequency resource blocks with a subcarrier spacing of 30 kHz.

In order to suppress interference between the time-frequency resource blocks with different subcarrier spacings, orthogonal spreading code transformation is respectively performed on last 12 pieces of data in the data contained in the second group of first sequences and first 6 pieces of data in the data contained in the third group of first sequences, and a specific process is as follows.

First expanding sequences with p=3 and q=4 are selected, i.e., the three groups of first expanding sequences respectively are: [1,-1,-1,1], [1,-1,1,-1], [1,1,-1,-1].

After the orthogonal spreading code transformation, a total number of pieces of data contained in a first group of second sequences is 64, a total number of pieces of data contained in a second group of second sequences is 64, a total number of pieces of data contained in a third group of second sequences is 32, a total number of pieces of data contained in a fourth group of second sequences is 32.

First inverse Fourier transform with 2-fold oversampling is performed on the first group of second sequences to obtain a first group of third sequences, a total number of inverse Fourier transform points is 128, and a total number of pieces of data contained in the first group of third sequences is 128.

First inverse Fourier transform with 2-fold oversampling is performed on the second group of second sequences to obtain a second group of third sequences, a total number of inverse Fourier transform points is 128, and a total number of pieces of data contained in the second group of third sequences is 128.

First inverse Fourier transform with 2-fold oversampling is performed on the third group of second sequences to obtain a third group of third sequences, a total number of inverse Fourier transform points is 64, and a total number of pieces of data contained in the third group of third sequences is 64.

First inverse Fourier transform with 2-fold oversampling is performed on the fourth group of second sequences to obtain a fourth group of third sequences, a total number of inverse Fourier transform points is 64, and a total number of pieces of data contained in the fourth group of third sequences is 64.

The first group of third sequences is used as a first group of fourth sequences, and the second group of third sequences is used as a second group of fourth sequences.

The third group of third sequences are spliced with another third group of third sequences, obtained by performing orthogonal spreading code transformation and first inverse Fourier transform with 2-fold oversampling on another first data sequence to be transmitted, to obtain a third group of fourth sequences.

The fourth group of third sequences are spliced with another fourth group of third sequences, obtained by performing orthogonal spreading code transformation and first inverse Fourier transform with 2-fold oversampling on another first data sequence to be transmitted, to obtain a fourth group of fourth sequences.

Second inverse Fourier transform is performed on the four groups of fourth sequences to obtain a second data sequence, specifically, the four groups of fourth sequences are arranged in four rows respectively, data in a second row and a fourth row are respectively multiplied with coefficient $[1,-1,1,...,(-1)^{128}]$; then taking four pieces of data out by columns, and inverse Fourier transform with 16-point oversampling is performed on the four pieces of data to obtain one sub-symbol, that is, every four pieces of data taken out by columns, after being subjected to the inverse Fourier transform with oversampling, corresponds to one sub-symbol, as shown in Fig. 8, the four pieces of data taken out at a first time corresponds to a sub-symbol 1, the four pieces of data taken out at a second time corresponds to a sub-symbol 2, ......, and the four pieces of data taken out at a 128th time corresponds to a sub-symbol 128. Each sub-symbol is then repetitively expanded by 4 times, as shown in Fig. 8, the sub-symbol 1 is expanded into 4 sub-symbols 1 to obtain a first group of sixth sequences, the sub-symbol 2 is expanded into 4 sub-symbols 2 to obtain a second group of sixth sequences, ......, the sub-symbol 128 is expanded into 4 sub-symbols 128 to obtain a 128th group

of sixth sequences.

The 128 groups of sixth sequences are arranged in a misaligned manner into 128 rows, a misaligned interval between first pieces of data in two adjacent rows is half of a length of a sub-symbol, and data in a same column of the 128 rows are added up to obtain a second data sequence.

The second data sequence is transmitted on the N time-frequency resource blocks.

Example 8

In the example, after obtaining the second data sequence according to the above examples, filtering is performed on the second data sequence, and then Digital Analog Conversion (DAC) and radio frequency processing are performed on filtered second data sequence, and the second data sequence subjected to the DAC and radio frequency processing is transmitted on N time-frequency resource blocks.

The filtering is single-phase filtering or polyphase filtering, the polyphase filtering is to filter each group of new N groups of data sequences.

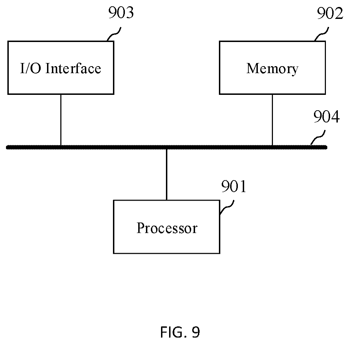

In a second aspect, referring to Fig. 9, an embodiment of the present application provides an electronic device, including: at least one processor 901; a memory 902 having at least one program stored thereon, the at least one program, executed by the at least one processor 901, implements the data transmission method described above.

In some implementations, the electronic device further includes: at least one I/O interface 903 connected between the processor 901 and the memory 902, and configured to implement information interaction between the processor 901 and the memory 902.

The processor 901 is a device having a capability of processing data, includes, but is not limited to, a Central Processing Unit (CPU), and the like; the memory 902 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface (read/write interface) 903 is connected between the processor 101 and the memory 902, enables to implement information interaction between the processor 901 and the memory 902, and includes, but is not limited to, a data Bus 904, and the like.

In some implementations, the processor 901, the memory 902, and the I/O interface 903 are connected together through a bus 904, and are then connected to other components of a computing device.

In a third aspect, an embodiment of the present application provides a computer readable medium having a computer program stored thereon, the computer program, executed by a processor, implements the data transmission method described above.

It should be understood by those of ordinary skilled in the art that all or some of the operations in the method, , or the functional modules/components in the system or the device described above may be implemented as software, firmware, hardware, or suitable combinations thereof; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). As known to those skilled in the art, the term of the computer storage medium includes volatile/nonvolatile or removable/non-removable medium used in any method or technology for storing information (such as computer-readable instructions, data structures, program modules and other data). The computer storage medium includes, but is not limited to, RAM, ROM, EEPROM, a flash memory or other memory techniques, CD-ROM, a Digital Video Disk (DVD) or other optical discs, magnetic cassettes, magnetic tapes, magnetic disks or other magnetic storage devices, or any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The present application discloses the exemplary embodiments, and although specific terms are employed, they are used and should only be interpreted in a generic and descriptive meaning and not for purposes of a limitation. In some examples, it is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present application as set forth in the appended claims.

**Claims**

**1.** A data transmission method, comprising:

performing orthogonal spreading code transformation on data contained in first sequences satisfying a condition, in N groups of first sequences obtained by dividing a first data sequence to be transmitted, to generate N groups of second sequences, wherein, the N groups of first sequences correspond to N time-frequency resource blocks, and the first sequences satisfying the condition comprise first sequences, in the N groups of first sequences, corresponding to the time-frequency resource blocks with a subcarrier spacing different from a subcarrier spacing of adjacent time-frequency resource blocks; N is an integer greater than or equal to 2; performing first inverse Fourier transform with A-fold oversampling on the N groups of second sequences to obtain N groups of third sequences, wherein A is an integer greater than or equal to 1; performing second inverse Fourier transform on the N groups of third sequences to obtain a second data sequence; transmitting the second data sequence on the N time-frequency resource blocks.

2. The method according to claim 1, wherein after performing first inverse Fourier transform with A-fold oversampling on the N groups of second sequences to obtain N groups of third sequences, and before performing second inverse Fourier transform on the N groups of third sequences to obtain the second data sequence, the method further comprises:

expanding the N groups of third sequences into N groups of fourth sequences, wherein, a total number of pieces of data contained in each group of fourth sequences is B, and B is a maximum value of a total number of pieces of data contained in the N groups of third sequences, the performing second inverse Fourier transform on the N groups of third sequences to obtain a second data sequence comprises: performing second inverse Fourier transform on the N groups of fourth sequences to obtain the second data sequence.

3. The method according to claim 2, wherein the performing second inverse Fourier transform on the N groups of fourth sequences to obtain the second data sequence comprises:

performing second inverse Fourier transform with C-fold oversampling on N pieces of data consisting of a $j^{th}$ data of the N groups of fourth sequences to obtain a $j^{th}$ group of fifth sequences, wherein C is an integer greater than or equal to 1, j is an integer greater than or equal to 1 and less than or equal to B; expanding B groups of fifth sequences into B groups of sixth sequences; wherein a total number of pieces of data contained in the sixth sequences is D times a total number of pieces of data contained in the fifth sequences, wherein D is an integer greater than or equal to 2; splicing the B groups of sixth sequences into the second data sequence.

4. The method according to claim 3, wherein after expanding the B groups of fifth sequences into the B groups of sixth sequences, and before splicing the B groups of sixth sequences into the second data sequence, the method further comprises:

performing windowing operation on the B groups of sixth sequences, the splicing the B groups of sixth sequences into the second data sequence comprises: splicing the B groups of sixth sequences subjected to the windowing operation into the second data sequence.

5. The method according to claim 1, wherein after performing first inverse Fourier transform with A-fold oversampling on the N groups of second sequences to obtain N groups of third sequences, and before performing second inverse Fourier transform on the N groups of third sequences to obtain the second data sequence, the method further comprises:

performing coefficient correction on the N groups of third sequences to obtain N groups of seventh sequences, the performing second inverse Fourier transform on the N groups of third sequences to obtain a second data sequence comprises: performing second inverse Fourier transform on the N groups of seventh sequences.

6. The method according to claim 5, wherein the performing coefficient correction on the N groups of third sequences to obtain N groups of seventh sequences comprises:

multiplying even-numbered groups of third sequences in the N groups of third sequences by corresponding data of a first coefficient vector to obtain the N groups of seventh sequences; or multiplying odd-numbered groups of third sequences in the N groups of third sequences by corresponding data of a second coefficient vector to obtain the N groups of seventh sequences.

7. The method according to claim 1, wherein after performing second inverse Fourier transform on the N groups of third sequences to obtain the second data sequence, and before transmitting the second data sequence on the N time-frequency resource blocks, the method further comprises:

filtering the second data sequence,
the transmitting the second data sequence on the N time-frequency resource blocks comprises:
transmitting the second data sequence filtered on the N time-frequency resource blocks.

8. The method according to any one of claims 1 to 7, wherein the performing orthogonal spreading code transformation on data contained in first sequences satisfying a condition, in N groups of first sequences obtained by dividing a first data sequence to be transmitted, to generate N groups of second sequences comprises:
performing orthogonal spreading code transformation on data to be transformed in the data contained in the first sequences satisfying the condition to obtain a corresponding second sequence, wherein, the data to be transformed is fore part data, or rear part data, or both the fore part data and the rear part data, or all data, in the data contained in the first sequences satisfying the condition.

9. The method according to claim 8, wherein the data to be transformed excludes reference signal data.

10. The method according to claim 8, wherein the data to be transformed comprises h pieces of data, and data obtained by performing orthogonal spreading code transformation on the data to be transformed comprises hq/p pieces of data;
wherein h is an integer greater than or equal to 1, p is a total number of groups of first expanding sequences used for the orthogonal spreading code transformation, and q is a length of the first expanding sequence.

11. The method according to claim 8, wherein the performing orthogonal spreading code transformation on data to be transformed in the data contained in the first sequences satisfying the condition to obtain a corresponding second sequence comprises:

expanding p groups of eight sequences obtained by dividing the data to be transformed into p groups of ninth sequences with a length of hq/p, wherein h is an integer greater than or equal to 1, p is a total number of groups of first expanding sequences used for the orthogonal spreading code transformation, and q is a length of the first expanding sequences;
expanding p groups of first expanding sequences with a length of q into p groups of second expanding sequences with a length of hq/p;
multiplying corresponding data in a $k^{th}$ group of ninth sequences and a $k^{th}$ group of second expanding sequences to obtain a $k^{th}$ group of tenth sequences, wherein k is an integer greater than or equal to 1, and less than or equal to p;
performing a weighted summation on p groups of tenth sequences to obtain an eleventh sequence;
splicing the eleventh sequence with other data except the data to be transformed in the data contained in the first sequences satisfying the condition to obtain the corresponding second sequence.

12. The method according to claim 8, wherein the performing orthogonal spreading code transformation on data to be transformed in the data contained in the first sequences satisfying the condition to obtain a corresponding second sequence comprises:

multiplying each piece of data in a $k^{th}$ group of eighth sequences in p groups of eighth sequences, obtained by dividing the data to be transformed, by each piece of data in a $k^{th}$ group of first expanding sequences in p groups of first expanding sequences with a length of q to obtain a $k^{th}$ group of tenth sequences, wherein p is a total number of groups of first expanding sequences used for the orthogonal spreading code transformation, and q is a length of the first expanding sequence, and k is an integer greater than or equal to 1, and less than or equal to p;
performing a weighted summation on p groups of tenth sequences to obtain an eleventh sequence;
splicing the eleventh sequence with other data except the data to be transformed in the data contained in the first sequences satisfying the condition to obtain the corresponding second sequence.

13. The method according to any one of claims 1 to 7, wherein A is 2, the performing first inverse Fourier transform with A-fold oversampling on the N groups of second sequences to obtain N groups of third sequences comprises:

adding data of $\dfrac{k'(n)}{2}$ zeros at two ends of an $n^{th}$ group of second sequences respectively, and performing first inverse Fourier transform on the $n^{th}$ group of second sequences added with the data of zeros to obtain an $n^{th}$ group of third sequences, wherein n is an integer greater than or equal to 1 and less than or equal to N, and k(n) is a total number of pieces of data contained in the $n^{th}$ group of second sequences.

14. The method according to any one of claims 1 to 7, wherein the first sequences satisfying the condition further comprise: a first group of first sequences and an $N^{th}$ group of first sequences.

15. The method according to any one of claims 1 to 7, wherein a subcarrier spacing of the time-frequency resource block corresponding to the first sequences satisfying the condition is different from a subcarrier spacing of a previous time-frequency resource block; or

the subcarrier spacing of the time-frequency resource block corresponding to the first sequences satisfying the condition is different from a subcarrier spacing of a next time-frequency resource block; or
the subcarrier spacing of the time-frequency resource block corresponding to the first sequences satisfying the condition is different from subcarrier spacings of the previous time-frequency resource block and the next time-frequency resource block.

16. The method according to any one of claims 1 to 7, wherein a ratio of a total number of pieces of data contained in the first sequences satisfying the condition to a total number of pieces of data contained in a previous group of first sequences is 2 to the power of i, wherein i is an integer greater than or equal to 1; or

a ratio of the number of pieces of data contained in the first sequences satisfying the condition to a total number of pieces of data contained in a next group of first sequences is 2 to the power of i; or
the ratio of the number of pieces of data contained in the first sequences satisfying the condition to the number of pieces of data contained in the previous group of first sequences is 2 to the power of i, and the ratio of the number of pieces of data contained in the first sequences satisfying the condition to the number of pieces of data contained in the next group of first sequences is 2 to the power of i.

17. The method according to any one of claims 1 to 7, wherein a total number of pieces of data contained in each group of second sequences is 2 to the power of i, wherein i is an integer greater than or equal to 1.

18. The method according to any one of claims 1 to 7, wherein a ratio of numbers of pieces of data contained in any two groups of second sequences is 2 to the power of i, wherein i is an integer greater than or equal to 1.

19. The method according to any one of claims 1 to 7, wherein there are at least two groups of second sequences containing different numbers of pieces of data.

20. The method according to any one of claims 1 to 7, wherein a total number of inverse Fourier transform points for the first inverse Fourier transform performed on an $n^{th}$ group of second sequences is the same as a total number of pieces of data contained in an $n^{th}$ group of third sequences, wherein n is an integer greater than or equal to 1 and less than or equal to N.

21. The method according to any one of claims 1 to 7, wherein a ratio of numbers of inverse Fourier transform points for the first inverse Fourier transform performed on any two groups of second sequences is 2 to the power of i, wherein i is an integer greater than or equal to 1.

22. The method according to any one of claims 1 to 7, wherein there are at least two groups of second sequences with different numbers of inverse Fourier transform points for the first inverse Fourier transform performed thereon.

23. The method according to any one of claims 1 to 7, wherein a zero-frequency position of the first inverse Fourier transform performed on an $n^{th}$ group of second sequences is within a frequency range of the time-frequency resource block corresponding to an $n^{th}$ group of first sequences, wherein n is an integer greater than or equal to 1 and less than or equal to N; zero-frequency positions of the first inverse Fourier transform performed on different groups of second sequences are different.

24. The method according to any one of claims 1 to 7, wherein a zero-frequency position of the first inverse Fourier transform performed on an $n^{th}$ group of second sequences is in one of subcarriers contained in the time-frequency resource block corresponding to an $n^{th}$ group of first sequences, wherein n is an integer greater than or equal to 1 and less than or equal to N.

25. The method according to any one of claims 1 to 7, wherein a total number of pieces of data contained in the third sequence corresponding to the first sequences satisfying the condition is greater than twice a total number of subcarriers contained in the time-frequency resource block corresponding to the first sequences satisfying the condition, a total number of pieces of data contained in the third sequence corresponding to first sequences not satisfying the condition is twice a total number of subcarriers contained in the time-frequency resource block corresponding to the first sequences not satisfying the condition.

26. The method according to any one of claims 1 to 7, wherein a total number of inverse Fourier transform points for the second inverse Fourier transform performed on N groups of third sequences is greater than N.

27. The method according to any one of claims 1 to 7, wherein the N time-frequency resource blocks are part or all of time-frequency resource blocks in a channel bandwidth, and the first data sequence to be transmitted is part or all of data to be transmitted in the channel bandwidth.

28. An electronic device, comprising:

    at least one processor;
    a memory having at least one program stored thereon, the at least one program, executed by the at least one processor, implements the data transmission method of any one of claims 1 to 27.

29. A computer readable medium having a computer program stored thereon, the computer program, executed by a processor, implements the data transmission method of any one of claims 1 to 27.

100

Perform orthogonal spreading code transformation on data contained in first sequences satisfying a condition, in N groups of first sequences obtained by dividing a first data sequence to be transmitted, to generate N groups of second sequences; the N groups of first sequences correspond to N time-frequency resource blocks, and the first sequences satisfying the condition include first sequences, in the N groups of first sequences, corresponding to the time-frequency resource blocks with a subcarrier spacing different from that of adjacent time-frequency resource blocks; N being an integer greater than or equal to 2

101

Perform first inverse Fourier transform with A-fold oversampling on the N groups of second sequences to obtain N groups of third sequences; A being an integer greater than or equal to 1

102

Perform second inverse Fourier transform on the N groups of third sequences to obtain a second data sequence

103

Transmit the second data sequence on the N time-frequency resource blocks

FIG. 1

FIG. 2

FIG. 3

FIG. 4

FIG. 5

FIG. 6

FIG. 7

0-padding

0-padding and oversampling

First IFFT

64

64

64

0-padding

Orthogonal Spreading Code Transformation

0-padding

0-padding and oversampling

First IFFT

48

48

64

12

16

0-padding

Orthogonal Spreading Code Transformation

0-padding

0-padding and oversampling

First IFFT

6

8

32

24

24

0-padding

Second IFFT

0-padding

0-padding and oversampling

First IFFT

32

32

32

0-padding

| Sub-symbol 1 | Sub-symbol 1 | Sub-symbol 1 | Sub-symbol 1 |

| Sub-symbol 2 | Sub-symbol 2 | Sub-symbol 2 | Sub-symbol 2 |

| Sub-symbol 128 | Sub-symbol 128 | Sub-symbol 128 | Sub-symbol 128 |

Time-domain superposition

Second data sequence

FIG. 8

903

902

I/O Interface

Memory

904

901

Processor

FIG. 9

## INTERNATIONAL SEARCH REPORT

| International application No. |
| --- |
| **PCT/CN2024/070807** |

### A. CLASSIFICATION OF SUBJECT MATTER

H04L 27/26(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; VEN; USTXT: EPTXT; WOTXT; CNKI: 正交, 扩展码, 变换, 时频, 资源块, 子载波, 间隔, 过采样, 傅立叶, 傅里叶, 逆变换, IFFT, orthogonal, spreading codes, transform, time frequency, resource blocks, subcarriers, interval, oversampling, Fourier, inverse transform

### C. DOCUMENTS CONSIDERED TO BE RELEVANT

| Category* | Citation of document, with indication, where appropriate, of the relevant passages | Relevant to claim No. |
| --- | --- | --- |
| A | CN 115622854 A (ZTE CORP.) 17 January 2023 (2023-01-17) description, paragraphs [0045]-[0210] | 1-29 |
| A | CN 107888531 A (HUAWEI TECHNOLOGIES CO., LTD.) 06 April 2018 (2018-04-06) entire document | 1-29 |
| A | CN 109873782 A (ZTE CORP.) 11 June 2019 (2019-06-11) entire document | 1-29 |
| A | CN 110430152 A (SHANGHAI ADVANCED RESEARCH INSTITUTE, CHINESE ACADEMY OF SCIENCES) 08 November 2019 (2019-11-08) entire document | 1-29 |
| A | US 10644916 B1 (GENGHISCOMM HOLDINGS LLC) 05 May 2020 (2020-05-05) entire document | 1-29 |

☐ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 February 2024** | **25 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/070807** |

| Patent document cited in search report | | | Publication date (day/month/year) | Patent family member(s) | Publication date (day/month/year) |
| --- | --- | --- | --- | --- | --- |
| CN | 115622854 | A | 17 January 2023 | None | |
| CN | 107888531 | A | 06 April 2018 | None | |
| CN | 109873782 | A | 11 June 2019 | None | |
| CN | 110430152 | A | 08 November 2019 | None | |
| US | 10644916 | B1 | 05 May 2020 | None | |

Form PCT/ISA/210 (patent family annex) (July 2022)